# EUROPÄISCHE PATENTSCHRIFT

(11) **EP 0 533 973 B1**
(45) Veröffentlichungstag und Bekanntmachung des Hinweises auf die Patenterteilung: **02.11.1994**
(21) Anmeldenummer: 91116280.8
(22) Anmeldetag: 25.09.1991
(51) Int. Cl.: G01D 5/26, G01P 1/04

(54) **Winkelmessvorrichtung**
Angle measuring device
Dispositif pour mesurer des angles

(43) Veröffentlichungstag der Anmeldung: 31.03.1993
(73) Patentinhaber: Dr. Johannes Heidenhain GmbH, D-83292 Traunreut (DE)
(72) Erfinder: Mitterreiter, Johann, Dipl.-Ing. (FH), W-8221 Tacherting (DE)

(56) Entgegenhaltungen:
- EP-A- 0 146 312
- FR-A- 2 109 742
- FR-A- 2 242 662

## Beschreibung

Die Erfindung betrifft eine Winkelmeßvorrichtung gemäß dem Oberbegriff des Anspruchs 1.

Derartige Winkelmeßvorrichtungen werden auch als "Einbaudrehgeber" bezeichnet (z. B. Firmendruckschrift der DR. JOHANNES HEIDENHAIN GmbH, Traunreut: Drehgeber, Ausgabe 2/88).

Aus der US-A-4,639,595 ist eine vormontierte Winkelmeßvorrichtung ohne eigene Lagerung bekannt. Im vormontierten Zustand bewirkt eine Klemmfeder den Zusammenhalt der Abtasteinrichtung mit der Nabe, an der der Teilungsträger angebracht ist. An der Nabe ist ein Anschlag vorgesehen, der die Abtasteinrichtung bei der Vormontage berührt und die Nabe in radialer und axialer Richtung fixiert. In diesem Zustand wird die Winkelmeßvorrichtung auf die Antriebswelle geschoben und die Abtasteinrichtung an der Anbaufläche der Antriebseinheit befestigt. Danach wird die Klemmfeder außer Eingriff gebracht und die Nabe in axialer Richtung auf der Antriebswelle verschoben. Diese Verschiebung ist notwendig, um die Berührung des Anschlages der Nabe mit der Abtasteinrichtung aufzuheben und eine reibungsfreie Drehung der Nabe relativ zur Abtasteinrichtung zu gewährleisten.

Bei dieser Winkelmeßvorrichtung ist zwar im vormontierten Zustand eine definierte Zuordnung zwischen der Nabe und der Abtasteinrichtung in radialer und axialer Richtung bezüglich der Nabenachse gegeben, diese Zuordnung muß aber während des Anbaus an die Antriebseinheit gelöst werden. Durch die notwendige axiale Verschiebung der Nabe und somit des Teilungsträgers relativ zur Abtasteinrichtung kann ohne zusätzliche Hilfsmittel keine definierte Zuordnung erzielt werden, und zwar weder in radialer noch in axialer Richtung. Die in der US-PS 4,639,595 offenbarten Maßnahmen bewirken nur eine Lagezuordnung im nichteingebauten Zustand.

Weitere Winkelmeßvorrichtungen sind in der US-A-4,556,792 und der DE-A-37 40 744 beschrieben. Zur axialen und radialen Einstellung der Nabe gegenüber der Abtasteinrichtung sind aufwendige Justiervorrichtungen notwendig. Die Fixierung der Nabe gegenüber der Abtasteinrichtung erfolgt mittels einer Vielzahl von Elementen, die alle vom Anwender wieder mühsam und zeitaufwendig entfernt werden müssen.

Der Erfindung liegt die Aufgabe zugrunde, eine Winkelmeßvorrichtung zu schaffen, bei der die Zuordnung zwischen dem Teilungsträger und der Abtasteinrichtung bereits vom Meßgerätehersteller vorgegeben ist und somit von vornherein eine exakte Ausrichtung der Teilung relativ zur Abtasteinrichtung gewährleistet ist. Dabei soll die Winkelmeßvorrichtung extrem einfach zu montieren sein.

Diese Aufgabe wird durch eine Winkelmeßvorrichtung gemäß Anspruch 1 gelöst.

Die besonderen Vorteile der erfindungsgemäßen Winkelmeßvorrichtung liegen darin, daß die Zuordnung zwischen der Teilung und der Abtasteinrichtung in axialer und in radialer Richtung vom Meßgerätehersteller vorgegeben ist und trotz Vormontage mit einfachen Mitteln diese Zuordnung auch während der Anlieferung, dem Anbau sowie auch während des Betriebes aufrechterhalten bleibt. Die Montage einer derartigen Winkelmeßvorrichtung ist vom Anwender auf einfachste Weise ohne aufwendige Justiervorrichtungen, ohne Zeitaufwand für Justierungen und ohne geschultes Personal möglich.

Anhand der Zeichnungen werden Ausführungsbeispiele der Erfindung näher erläutert.

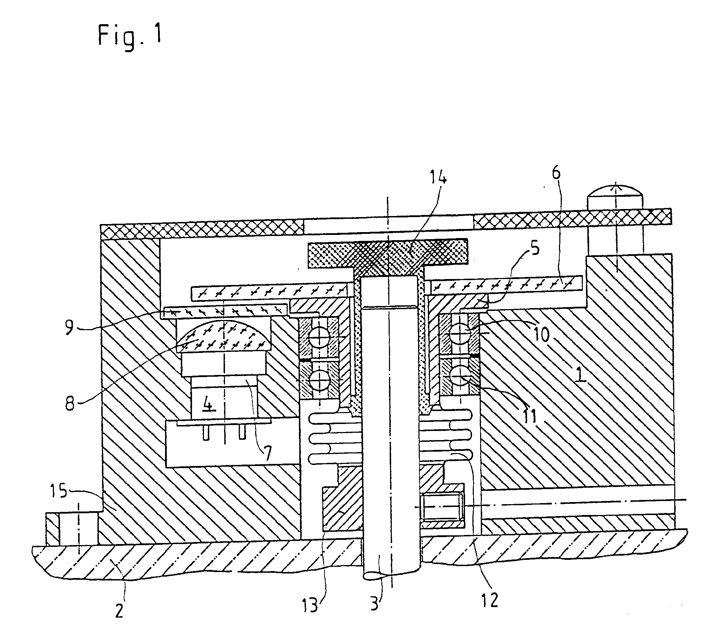

Gleiche Bauteile tragen in den Figuren der Einfachheit halber gleiche Bezugszeichen, da der Zusammenhang ohne Weiteres ersichtlich ist. Sind die Bauteile gegenüber dem Beispiel aus Figur 1 verändert, so ist ihnen die Figurenbezifferung als eine Art Index vorangestellt.

Es zeigt
- Figur 1: einen Längsschnitt durch eine erfindungsgemäße Winkelmeßvorrichtung;
- Figur 2: einen Ausschnitt aus einer Variante einer Winkelmeßeinrichtung;
- Figur 3A: eine weitere Variante;
- Figur 3B: eine Spreizhülse und
- Figur 4: eine weitere Variante.

In Figur 1 ist eine Winkelmeßvorrichtung 1 dargestellt, die an einer Antriebseinheit 2, beispielsweise einem Motor, angebaut ist. Mit der Winkelmeßvorrichtung 1 soll die Drehung einer Antriebswelle 3 gegenüber einer Abtasteinrichtung 4 gemessen werden. Die Winkelmeßvorrichtung 1 weist eine Nabe 5 auf, an der eine Scheibe 6 mit einer nicht dargestellten Teilung zentrisch angebracht ist.

Die Abtasteinrichtung 4 besteht aus einer Lichtquelle 7, einem Kondensor 8, einer Abtastplatte 9 und weiteren üblichen Bauelementen. Die Teilung wird in bekannter Weise im Durchlichtverfahren abgetastet. Abtastsignale werden über nicht gezeigte elektrische Leitungen zu einer Auswerteeinrichtung, so z. B. zu einem Zähler oder einer numerischen Steuerung geleitet.

Die Abtasteinrichtung 4, insbesondere die Abtastplatte 9, muß sowohl in radialer als auch in axialer Richtung genau zur Teilung der Scheibe 6 ausgerichtet sein. Diese Zuordnung ist durch die Fertigung der Nabe 5 und der Abtasteinrichtung 4 vorgegeben. Die Nabe 5 und die Abtasteinrichtung 4 sind über zwei zueinander verspannte Kugellager 10 und 11 miteinander verbunden.

Durch die Verspannung der Kugellager 10 und 11 wird die Einheit aus Abtasteinrichtung 4 und Nabe 5 spielfrei.

Die Nabe 5 trägt an ihrem der Scheibe 6 abgewandten Ende eine Balgkupplung 12, die ihrerseits an ihrem freien Ende ein Klemmstück 13 trägt.

Um die Winkelmeßvorrichtung 1 an der Antriebseinheit 2 lagerichtig zu befestigen, ist erfindungsgemäß eine Zentrierhülse 14 vorgesehen. Die Zentrierhülse 14 befindet sich in der Nabe 5 und zentriert die Winkelmeßvorrichtung 1 auf der Antriebswelle 3 der Antriebseinheit 2.

Der Montagevorgang ist also extrem einfach, denn die beim Hersteller vormontierte Winkelmeßvorrichtung 1 wird lediglich auf die Antriebswelle 3 gesteckt und deren Gehäuse - auch als Stator 15 bezeichnet - an der Antriebseinheit 2 festgeschraubt. Die Befestigungsschrauben sind nicht gezeigt, lediglich deren Mittellinien angedeutet. Nach erfolgter Montage wird mit Hilfe eines Klemmstückes 13 die verdrehsteife Balgkupplung 12 auf der Welle 3 fixiert.

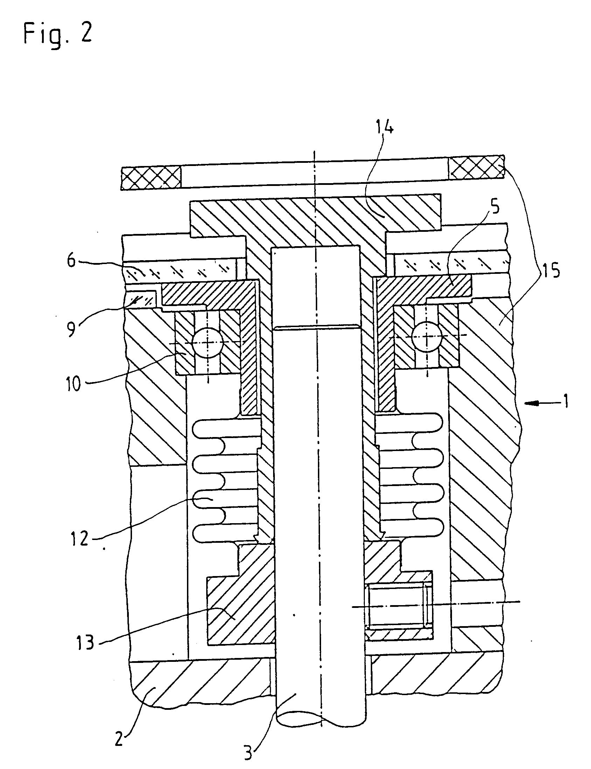

In Figur 2 ist ein Ausschnitt einer Winkelmeßvorrichtung 1 gezeigt. Dort ist nur noch ein Kugellager 10 vorgesehen. Bei der Montage wird die Zentrierhülse 14 in der gleichen Weise wie beim Beispiel gemäß Figur 1 nach dem Festschrauben des Statorgehäuses 15 durch axialen Druck an ihrem freien Ende von der Nabe 5 gelöst. Damit wird die Balgkupplung 12 axial belastet und ein Bund an der Zentrierhülse 14 wird eine Schulter des Kugellagers 10 belastet, so daß auch diese Lagerung mit nur einem Kugellager 10 spielfrei ist.

Die Befestigung der Winkelmeßvorrichtung 1 auf der Welle 3 erfolgt wieder mit dem Klemmstück 13.

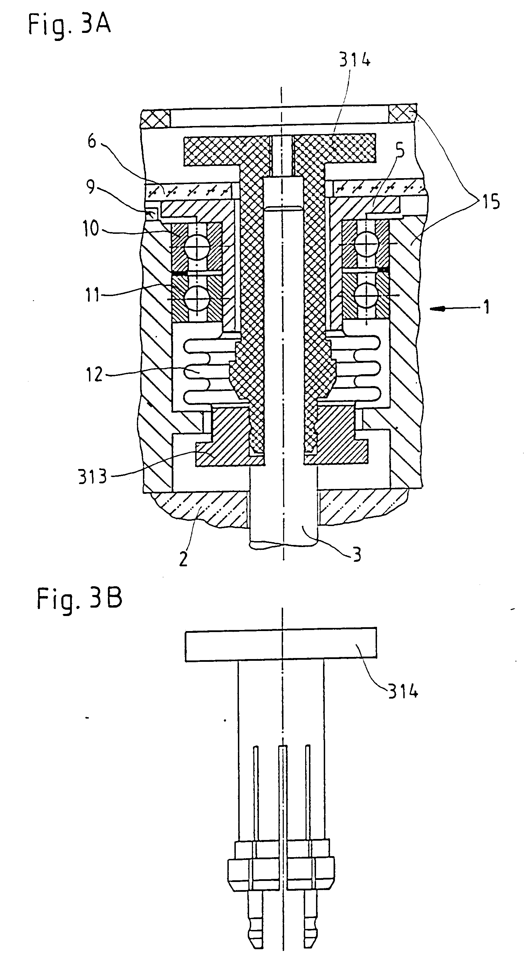

Noch vorteilhafter ist die Ausführungsform gemäß Figur 3A, wobei in Figur 3B die wesentliche Variation durch die Spreizhülse 314 gezeigt ist, durch die gleichzeitig die Zentrierung und die Fixierung erfolgt.

Die Montage der Winkelmeßvorrichtung 1 erfolgt in gleicher Weise wie bereits zu Figur 1 beschrieben ist. Die Zentrierhülse 314 ist Bestandteil der vormontierten Winkelmeßvorrichtung 1 und zentriert diese auf der Welle 3 der Antriebseinheit 2. Durch axial ausgeübten Druck auf die Zentrierhülse 314 löst sich diese von der Nabe 5, spannt aber mittels eines formschlüssigen Klemmstückes 313 die Winkelmeßvorrichtung 1 auf der Welle 3 fest.

Durch diese Maßnahme erübrigt sich die Verschraubung eines Klemmstückes an der Welle, wie dies bei den vorbeschriebenen Ausführungsbeispielen der Fall war.

Figur 3B zeigt die Zentrierhülse - die hier die Wirkung einer Spreizhülse hat - im Detail.

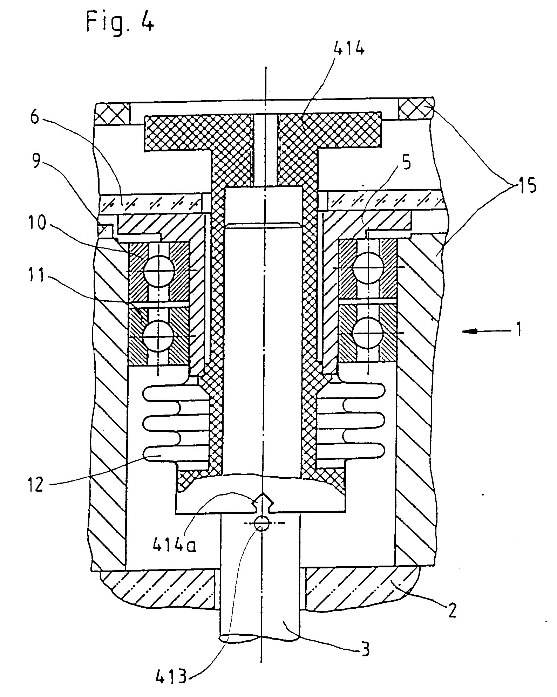

Eine weitere vorteilhafte Lösung ist in Figur 4 gezeigt, die im Grundaufbau den anderen Ausführungsbeispielen gleicht, aber die Klemmung der Winkelmeßvorrichtung 1 auf der Welle 3 unterscheidet sich von den anderen Beispielen. In der Welle 3 ist ein Stift 413 vorgesehen, der senkrecht zur Achse der Welle 3 verläuft. In der Zentrierhülse 414, die nach der Montage die Nabe 5 der Winkelmeßvorrichtung 1 freigibt, befindet sich eine Aufnahme 414a für die spielfreie Aufnahme des Stiftes 413. Durch das Zusammenwirken des Stiftes 413 mit der Aufnahme 414a in der Zentrierhülse 414 entsteht eine drehsteife Verbindung zwischen der zu messenden Welle 3 und der Winkelmeßvorrichtung 1.

Bei all diesen Ausführungsbeispielen ist zur Montage keinerlei Spezialwerkzeug notwendig, lediglich das Statorgehäuse 15 muß an der Antriebseinheit 2, die die zu messende Welle enthält, befestigt werden. Zentrierung und Klemmung erfolgt auf die beschriebene einfache Weise, so daß durch die erfindungsgemäße Winkelmeßvorrichtung die gestellte Aufgabe in optimaler Weise gelöst wird.

## Patentansprüche

1. Winkelmeßeinrichtung (1) zur Messung der Winkellage zweier relativ zueinander drehbarer Objekte, bei der die Teilung einer an einer drehbaren Welle (3) befestigten Teilscheibe (6), die mit dem einen zu messenden Objekt verbunden ist, von wenigstens einer Abtasteinheit (4) abgetastet wird, die über ein Gehäuse als Stator (15) mit dem anderen zu messenden Objekt starr verbunden ist, wobei die Teilscheibe (6) auf einer Nabe (5) spielfrei in dem Stator (15) gelagert und über eine winkelbewegliche, verdrehsteife Kupplung und ein Klemmstück (13) mit der zu messenden Welle (3) verbunden ist, dadurch gekennzeichnet, daß zur Montage auf der Welle (3) in der Winkelmeßeinrichtung (1) eine Zentrierhülse (14) vorgesehen ist, die so gestaltet ist, daß sie auf der Welle (3) axial zwischen zwei Positionen verschieblich ist, wobei sie in der ersten Position zwischen der Nabe (5) und der Welle (3) eine spielfreie Verbindung herstellt und in der zweiten Position von der Nabe (5) gelöst ist.

2. Winkelmeßeinrichtung nach Anspruch 1, dadurch gekennzeichnet, daß die Zentrierhülse (14) in der zweiten Position ein Kugellager (10) zwischen Nabe (5) und Statorgehäuse (15) axial belastet vorspannt.

3. Winkelmeßeinrichtung nach Anspruch 1, dadurch gekennzeichnet, daß die Zentrierhülse (314) in der zweiten Position eine kraftschlüssige Klemmung der Winkelmeßeinrichtung (1) auf der Welle (3) bewirkt.

4. Winkelmeßeinrichtung nach Anspruch 3, dadurch gekennzeichnet, daß die Zentrierhülse (314) als Spreizhülse ausgebildet ist.

5. Winkelmeßeinrichtung nach Anspruch 1, dadurch gekennzeichnet, daß die Zentrierhülse (414) in der zweiten Position eine formschlüssige Klemmung der Winkelmeßvorrichtung (1) auf der Welle (3) bewirkt.

6. Winkelmeßeinrichtung nach Anspruch 5, dadurch gekennzeichnet, daß die Welle (3) einen Stift (413) und die Zentrierhülse (414) eine Aufnahme (414a) für den Stift (413) aufweist.

## Claims

1. Angle measuring device (1) for measuring the angular position of two relatively rotatable objects, in which the scale of an index disc (6) which is attached to a rotatable shaft (3) and which is connected to one object to be measured, is scanned by at least one scanning unit (4) which is rigidly connected by a housing as a stator (15) to the other object to be measured, wherein the index disc (6) is mounted on a hub (5) without play in the stator (15) and connected to the shaft (3) to be measured by an angularly movable, non-rotatable coupling and a clamping piece (13), characterised in that for mounting on the shaft (3) in the angle measuring device (1) there is provided a centring sleeve (14) which is designed in such a way that it is axially slidable between two positions on the shaft (3), wherein in the first position it makes a connection without play between the hub (5) and the shaft (3) and in the second position it is released from the hub (5).

2. Angle measuring device according to claim 1, characterised in that the centring sleeve (14) in the second position prestresses a ball bearing (10) between hub (5) and stator housing (15) with axial loading.

3. Angle measuring device according to claim 1, characterised in that the centring sleeve (314) in the second position causes force-locking clamping of the angle measuring device (1) on the shaft (3).

4. Angle measuring device according to claim 3, characterised in that the centring sleeve (314) is constructed as an expander sleeve.

5. Angle measuring device according to claim 1, characterised in that the centring sleeve (414) in the second position causes form-locking clamping of the angle measuring device (1) on the shaft (3).

6. Angle measuring device according to claim 5, characterised in that the shaft (3) comprises a pin (413) and the centring sleeve (414) comprises a receptacle (414a) for the pin (413).

## Revendications

1. Dispositif de mesure d'angles (1) pour mesurer la position angulaire de deux objets mobiles en rotation l'un par rapport à l'autre, dans lequel la graduation d'un disque gradué (6) fixé sur un arbre (3) tournant lié à l'un des objets à mesurer est lue par au moins une unité de lecture (4) qui est liée rigidement à l'autre objet par l'intermédiaire d'un boîtier formant stator (15), le disque gradué (6) étant monté sans jeu dans le stator (15) sur un moyeu (5) et étant lié à l'arbre (3) dont il s'agit de mesurer les déplacements par l'intermédiaire d'un accouplement rigide en torsion mais admettant les mouvements angulaires et d'un élément de serrage (13), caractérisé par le fait qu'il est prévu pour le montage sur l'arbre (3) dans le dispositif de mesure d'angles (1) une douille de centrage (14) qui est agencée de manière à pouvoir être déplacée axialement sur l'arbre (3) entre deux positions, la douille, dans une première position, réalisant une liaison sans jeu entre le moyeu (5) et l'arbre (3) tandis que, dans une deuxième position. elle est dégagée du moyeu (5).

2. Dispositif de mesure d'angles selon la revendication 1, caractérisé par le fait que, dans la deuxième position, la douille de centrage (14) applique une précontrainte axiale sur un palier à billes (10) prévu entre le moyeu (5) et le corps du stator (15).

3. Dispositif de mesure d'angles selon la revendication 1, caractérisé par le fait que, dans la deuxième position, la douille de centrage (314) réalise un blocage par force du dispositif de mesure d'angles (1) sur l'arbre (3).

4. Dispositif de mesure d'angles selon la revendication 3, caractérisé par le fait que la douille de centrage (314) est agencée sous forme de douille expansible.

5. Dispositif de mesure d'angles selon la revendication 1, caractérisé par le fait que, dans la deuxième position, la douille de centrage (414) réalise un blocage par obstacle du dispositif de mesure d'angles (1) sur l'arbre (3).

6. Dispositif de mesure d'angles selon la revendication 1, caractérisé par le fait que l'arbre (3) comporte une goupille (413) et la douille de centrage (414) comporte un moyen de réception (414a) pour la goupille (413).
